# EUROPÄISCHE PATENTSCHRIFT

(11) **EP 3 736 649 B1**
(45) Veröffentlichungstag und Bekanntmachung des Hinweises auf die Patenterteilung: **21.08.2024**
(21) Anmeldenummer: 19173564.6
(22) Anmeldetag: 09.05.2019
(51) Int. Cl.: G05B 23/02, G01M 13/045, G01H 1/00

(54) **VERFAHREN ZUR ABSCHÄTZUNG EINER RESTLEBENSDAUER MINDESTENS EINER ELEKTROMECHANISCHEN KOMPONENTE**
METHOD FOR ESTIMATING THE REMAINING USEFUL LIFE OF AT LEAST ONE ELECTROMECHANICAL COMPONENT
PROCÉDÉ D'ÉVALUATION D'UNE DURÉE DE VIE RÉSIDUELLE D'AU MOINS UN COMPOSANT ÉLECTROMÉCANIQUE

(43) Veröffentlichungstag der Anmeldung: 11.11.2020
(73) Patentinhaber: Siemens Aktiengesellschaft, 80333 München (DE)
(72) Erfinder: Bosco, Arianna, 80638 München (DE); Cordes, Stefan, 91315 Höchstadt (DE); Heinrich, Christoph, 86609 Donauwörth (DE); Nair, Sudev, 560078 Bangalore (IN); Ochsenfeld, Henning, 90491 Nürnberg (DE); Reimann, Thorsten, 91052 Erlangen (DE); Wolf Pozzo, Christian Andreas, 90513 Zirndorf (DE)
(74) Vertreter: Siemens Patent Attorneys

(56) Entgegenhaltungen:
- EP-A1- 3 462 264
- US-A1- 2015 262 060

## Beschreibung

Die Erfindung betrifft ein Verfahren zur Abschätzung einer Restlebensdauer mindestens einer elektromechanischen Komponente.

Des Weiteren betrifft die Erfindung eine Steuereinheit mit Mitteln zur Durchführung eines derartigen Verfahrens.

Darüber hinaus betrifft die Erfindung ein Computerprogramm zur Durchführung eines derartigen Verfahrens bei Ablauf in einer Steuereinheit.

Ferner betrifft die Erfindung ein Computerprogrammprodukt mit einem Computerprogramm.

Zudem betrifft die Erfindung ein System zur Durchführung eines derartigen Verfahrens.

Elektromechanische Komponenten oder Systeme, wie beispielsweise elektrische rotierende Maschinen, Turbinen wie Gasturbinen oder Dampfturbinen, Lager, Getriebe oder Antriebssysteme fallen im Betrieb insbesondere aufgrund von Materialermüdung, Verformung oder Bruch durch äußere Einflüsse oder innere Strukturschwächen aus. Derartige Fehler führen beispielsweise zu einer Beschädigung einer Oberfläche, einer Geometrie oder einer inneren Struktur. Wird ein Fehler nicht frühzeitig erkannt, kann es zu Anlagenstillständen und ungeplanten Wartungsarbeiten kommen.

Obwohl es möglich ist, Fehler in einer elektromechanischen Komponente, beispielsweise auf Grundlage von Sensordaten, zu erkennen und die Entwicklung derartiger Fehler zu überwachen, ist es nicht möglich mit jenen Daten allein, eine Vorhersage über die Restlebensdauer (RUL) der elektromechanischen Komponente zu treffen.

Die Offenlegungsschrift US 2015/0262060 A1 beschreibt ein System und ein Verfahren zur Abschätzung einer Restlebensdauer einer mechanischen Komponente wie einem Lager auf der Grundlage verfügbarer Daten zur Zustandsüberwachung, wobei die Restlebensdauer der mechanischen Komponente auf der Grundlage eines trainierten künstlichen neuronalen Netzes ermittelt wird.

Der Erfindung liegt die Aufgabe zugrunde, ein Verfahren zur Abschätzung einer Restlebensdauer mindestens einer elektromechanischen Komponente anzugeben, welches, im Vergleich zum Stand der Technik, eine hohe Zuverlässigkeit aufweist.

Die Aufgabe wird erfindungsgemäß durch ein Verfahren gem. Anspruch 1 gelöst.

Des Weiteren wird die Aufgabe erfindungsgemäß gelöst durch ein System gem. Anspruch 7.

Die in Bezug auf das Verfahren nachstehend angeführten Vorteile und bevorzugten Ausgestaltungen lassen sich sinngemäß auf die Steuereinheit, das Computerprogramm, das Computerprogrammprodukt und das System übertragen.

Der Erfindung liegt die Überlegung zugrunde, einen Fehler einer elektromechanischen Komponente während des Betriebes durch Abgleich von Sensormessdaten mit vorhandenen Fehlerbildern zu identifizieren und daraufhin eine Restlebensdauer anhand des identifizierten Fehlers durch eine nummerische Simulation an einem physikalischen Modell mit hoher Zuverlässigkeit zu ermitteln.

Eine elektromechanische Komponente ist beispielsweise eine elektrische rotierende Maschine, eine Turbine wie eine Gasturbine oder eine Dampfturbine, ein Lager, ein Getriebe oder ein Antriebssystem, welches eine elektrische rotierende Maschine umfasst. Sensormessdaten, die auch Sensordaten genannt werden, werden insbesondere von zumindest einer Sensorvorrichtung, die beispielsweise als Beschleunigungs- oder Vibrationssensor, ausgeführt ist, erfasst. Durch die Möglichkeit einer Verwendung derartig verschiedener Sensoren wird eine hohe Flexibilität bereitgestellt. Die Sensorvorrichtung ist der elektromechanischen Komponente zugeordnet. Eine Zuordnung erfolgt beispielsweise indem die Sensorvorrichtung mit der elektromechanischen Komponente verbunden ist. Eine Systemgröße wird aus den Sensormessdaten ermittelt. Ferner wird der Systemgröße mindestens ein Fehlerfall der elektromechanischen Komponente zugeordnet. Ein Fehlerfall ist zumindest ein Fehlerbild, wobei der Fehlerfall zusätzlich eine Fehlerschwere umfassen kann. Ein Fehlerfall ist beispielsweise eine Unwucht in einer elektrischen rotierenden Maschine, ein Lagerschaden in einem Lager oder ein Kippfuss, wobei der mindestens eine Fehlerfall beispielsweise in einer Fehlerdatenbank hinterlegt ist. Eine derartige Fehlerzuordnung ist auf einfache Weise automatisiert und dennoch sehr zuverlässig möglich.

Eine Stressbelastung der elektromechanischen Komponente, welche sich aus dem Fehler ergibt, wird mit Hilfe eines nummerischen Verfahrens an einem physikalischen Modell simuliert, wobei eine Restlebensdauer aus der simulierten Stress-belastung, beispielsweise mit Hilfe von Materialeigenschaften, ermittelt wird. Ein physikalisches Modell ist beispielsweise ein CAD-Modell. Eine numerische Simulation mit einem derartigen Modell ist vorteilhaft, da so eine hohe Genauigkeit erreicht wird.

Die Mittel zur Durchführung des Verfahrens umfassen beispielweise einen Mikrocontroller oder einen anderen programmierbaren Logikbaustein und ein Computerprogramm. Die Steuereinheit ist beispielsweise dem Mikrocontroller zugeordnet.

Erfindungsgemäß wird der Systemgröße mittels zumindest eines künstlichen neuronalen Netzes mindestens ein Fehlerfall zugeordnet. Neuronale Netze liefern qualitativ hochwertige Ergebnisse.

Besonders vorteilhaft ist das künstliche neuronale Netz mehrschichtig ausgeführt. Eine Erhöhung der Schichtenzahl in einem künstlichen neuronalen Netz führt zu einer verbesserten, insbesondere komplexeren, Abstraktionsfähigkeit, was die Zuverlässigkeit hinsichtlich der Zuordnung eines Fehlerfalls verbessert.

Eine weitere Ausführungsform sieht vor, dass das künstliche neuronale Netz mit simulierten Daten und mit empirischen Daten trainiert wird oder ist. Durch die Verwendung simulierter Daten und empirisch ermittelter Daten wird eine breite Datenbasis zur Verfügung gestellt, sodass eine Zuordnung eines Fehlerfalls verbessert wird.

Besonders vorteilhaft ist das künstliche neuronale Netz vortrainiert. Durch die Verwendung eines vortrainierten Netzes ist das Verfahren sehr schnell einsatzbereit.

Eine weitere Ausführungsform sieht vor, dass die Stressbelastung mittels einer FEM-Simulation simuliert wird. Eine Simulation mittels der Finite-Elemente-Methode, kurz FEM, führt auch bei komplexen Geometrien zu sehr genauen Ergebnissen.

Erfindungsgemäß wird die Systemgröße aus einem Vibrationssignal ermittelt. Aus erfassten Vibrationssignalen ist eine große Anzahl von Fehlern einer elektromechanischen Komponente zuverlässig ermittelbar.

Besonders vorteilhaft wird die Systemgröße mittels einer Spektralanalyse und/oder einer Hüllkurvenanalyse der Sensordaten ermittelt. Eine Spektralanalyse wird beispielsweise mit einer FFT durchgeführt. Unter einer FFT ist eine Fast Fourier Transformation zu verstehen, mit deren Hilfe die Sensordatensignale in den Frequenzbereich transformiert werden. Eine Hüllkurvenanalyse wird beispielsweise über eine Hilbert-Transformation durchgeführt. Alternativ wird eine Hüllkurvenanalyse durch Gleichrichtung und anschließende Tiefpassfilterung durchgeführt. Optional wird des Hüllkurvensignal mittels einer Spektralanalyse weiterverarbeitet. Mit Hilfe einer Spektralanalyse und/oder einer Hüllkurvenanalyse lassen sich Systemgrößen mit hoher Genauigkeit analysieren.

Erfindungsgemäß wird der Systemgröße anhand eines ermittelten Spektrums der Sensordaten mindestens ein Fehlerbild eines Fehlerfalls der elektromechanischen Komponente zugeordnet. Die Information über das Fehlerbild eines Fehlerfalls liegt im Spektrum der Sensordaten. Beispielsweise wird eine Hüllkurvenanalyse mit anschließender Spektralanalyse zur Zuordnung des mindestens einen Fehlerbildes durchgeführt. Da verschiedene Fehlerbilder, beispielsweise ein Außenringschaden, ein Innenringschaden oder ein Wälzkörperschaden eines Wälzlagers, durch unterschiedliche Frequenzanteile im ermittelten Spektrum identifizierbar sind, ist eine Zuordnung mindestens eines Fehlerbildes anhand eines ermittelten Spektrums zuverlässig und leicht automatisierbar.

Eine weitere Ausführungsform sieht vor, dass der Systemgröße anhand einer Harmonischen und/oder einer Amplitude der Sensordaten eine Fehlerschwere eines Fehlerfalls der elektromechanischen Komponente zugeordnet wird. Die Information über die Fehlerschwere eines Fehlerfalls liegt insbesondere in der Amplitude des Basisbandsignals und/oder in der, insbesondere relativen, Amplitude der Harmonischen. Das Verhältnis der Basisbandfrequenzen zu den Harmonischen wird beispielsweise über den Intermodulationsabstand berechnet. Eine Zuordnung einer Fehlerschwere anhand einer Harmonischen und/oder einer Amplitude ist zuverlässig und leicht automatisierbar.

Im Folgenden wird die Erfindung anhand der in den Figuren dargestellten Ausführungsbeispiele näher beschrieben und erläutert.
- FIG 1: eine schematische Darstellung einer Anordnung mit einem System zur Abschätzung einer Restlebensdauer einer elektromechanischen Komponente und
- FIG 2: ein Ablaufdiagramm eines Verfahrens zur Abschätzung einer Restlebensdauer einer elektromechanischen Komponente.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

Gleiche Bezugszeichen haben in den verschiedenen Figuren die gleiche Bedeutung.

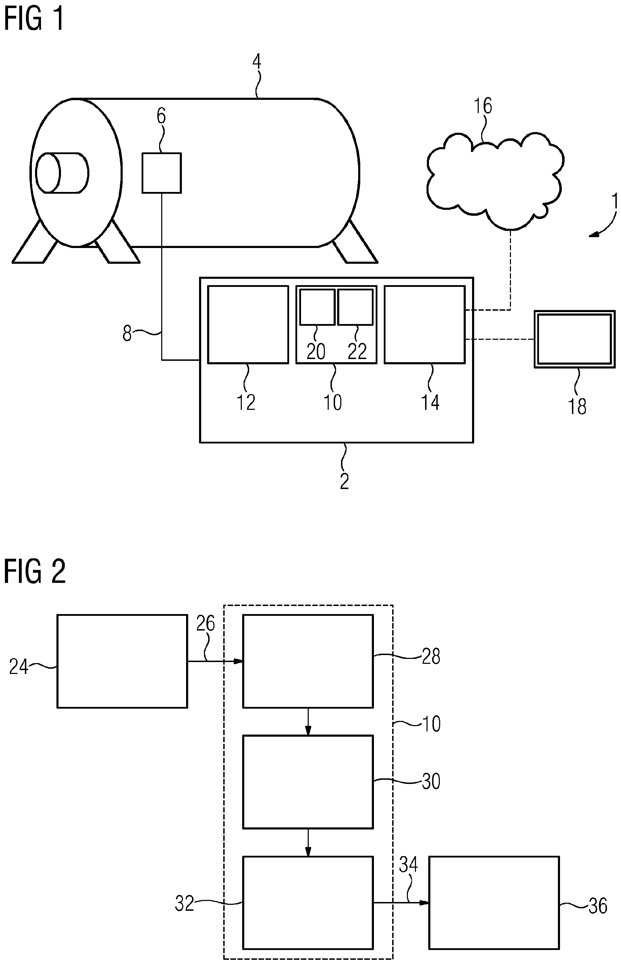

FIG 1 zeigt eine schematische Darstellung einer Anordnung 1 mit einem System 2 zur Abschätzung einer Restlebensdauer einer elektromechanischen Komponente 4. Beispielsweise ist die elektromechanische Komponente 4 als eine elektrische rotierende Maschine ausgeführt. Alternativ ist die elektromechanische Komponente 4 als eine Turbine, beispielsweise eine Gasturbine oder eine Dampfturbine, ein Lager, ein Getriebe oder ein Antriebssystem, welches eine elektrische rotierende Maschine umfasst, ausgeführt. Das System 2 zur Abschätzung der Restlebensdauer der elektromechanischen Komponente 4 ist insbesondere in einem Gehäuse integriert und ist beispielsweise als Edge-Gerät an der elektromechanischen Komponente 4 verbindbar. Zusätzlich oder alternativ ist das System 2 in der Nähe der elektromechanischen Komponente 4, beispielsweise in maximal 10 m Entfernung, platzierbar. Das System 2 umfasst mindestens eine Sensorvorrichtung 6, die beispielsweise einen Vibrationssensor und/oder einen Beschleunigungssensor umfasst. Das System 2 weist eine Sensorschnittstelle 8 zur Verbindung der Sensorvorrichtung 6 auf. Als Sensorschnittstelle 8 wird beispielsweise eine Kabelverbindung oder eine drahtlose Verbindung, abhängig von der Abtastrate und der Übertragungsrate verwendet. Insbesondere bei der Verwendung von Sensorvorrichtungen 6 mit einer Abtastrate von mindestens 1 MBit/s werden Kabelverbindungen bevorzugt.

Das System 2 zur Abschätzung der Restlebensdauer der elektromechanischen Komponente 4 ist nicht auf Lager beschränkt. Zusätzlich kann die Sensorvorrichtung 6, je nach Anwendung, Dehnungsmessstreifen, optische Sensoren und/oder Thermoelemente umfassen.

Das System 2 umfasst darüber hinaus eine Analyseeinheit 10, eine Stromversorgung 12, die beispielsweise eine Batterie oder einen Akku aufweist, und eine Kommunikationseinheit 14, über die eine Verbindung zu einer Cloud 16 und/oder zu einer Anzeigevorrichtung 18 herstellbar ist, wobei die Verbindung drahtlos, drahtgebunden oder optisch stattfindet. Beispielsweise werden die Daten über Bluetooth oder WLAN übertragen. Eine Cloud 16 ist eine IT-Infrastruktur, in der beispielsweise Speicherplatz, Rechenleistung und Anwendungssoftware als Dienstleistung über das Internet bereitgestellt werden. Eine Anzeigevorrichtung 18 ist beispielsweise ein Display, ein Tablet, ein Smartphone oder ein lokales Computersystem. Die Analyseeinheit 10 weist ein Algorithmik-Modul 20 und ein Simulations-Modul 22 auf, wobei das Algorithmik-Modul 20 Fehlerdetektionsmittel und das Simulations-Modul 22 eine Recheneinheit zur Durchführung eines nummerischen Verfahrens an einem physikalischen Modell aufweist. Die Fehlerdetektionsmittel umfassen beispielsweise ein, insbesondere mehrschichtiges, künstliches neuronales Netz, welches mit simulierten Daten und mit empirischen Daten mit Hilfe von Lernalgorithmen trainierbar ist. Die simulierten Daten und die empirischen Daten sind beispielsweise in einer, insbesondere cloud-basierten, Fehlerdatenbank hinterlegt. Beispielsweise sind die simulierten Daten und die empirischen Daten zumindest teilweise über die Verbindung zur Cloud 16 abrufbar. Zusätzlich kann das künstliche neuronale Netz mit simulierten Daten und/oder mit empirischen Daten vortrainiert sein. Das Simulations-Modul 22 weist zumindest ein Modell auf, das als Simulationsmodell, vorberechnetes Detailmodell oder grobes onlinefähiges Modell ausgeführt ist. Neben dem zumindest einem Modell sind Materialeigenschaften hinterlegt, welche zur Ermittlung der Restlebensdauer heranziehbar sind.

FIG 2 zeigt ein Ablaufdiagramm eines Verfahrens zur Abschätzung einer Restlebensdauer einer elektromechanischen Komponente 4. Zunächst erfolgt eine Ermittlung einer Systemgröße 24 aus Sensordaten mindestens einer Sensorvorrichtung 6, die zumindest einer elektromechanischen Komponente 4 zugeordnet ist. Erfindungsgemäß wird die Systemgröße aus einem Vibrationssignal ermittelt, wobei bspw. eine Spektralanalyse und/oder einer Hüllkurvenanalyse der Sensordaten durchgeführt wird.

Die ermittelten Daten 26 zur Systemgröße werden von der Sensorvorrichtung 6 an die Analyseeinheit 10 zur Abschätzung der Restlebensdauer der elektromechanischen Komponente 4 übertragen. Mit Hilfe der ermittelten Daten 26 zur Systemgröße und mittels eines künstlichen neuronalen Netzes erfolgt zumindest eine Fehlerfallzuordnung 28. Dabei wird der Systemgröße anhand eines ermittelten Spektrums der Sensordaten mindestens ein Fehlerbild eines Fehlerfalls der elektromechanischen Komponente 4 zugeordnet. Ferner wird der Systemgröße anhand einer Harmonischen und/oder einer Amplitude der Sensordaten eine Fehlerschwere eines Fehlerfalls der elektromechanischen Komponente 4 zugeordnet. Die Information über das Fehlerbild eines Fehlerfalls liegt im Spektrum der Sensordaten, während die Information über die Fehlerschwere eines Fehlerfalls in der Amplitude des Basisbandsignals und/oder in der, insbesondere relativen, Amplitude der Harmonischen liegt. Zusätzlich oder alternativ wird ein Intermodulationsabstand berechnet, um das Verhältnis der Basisbandfrequenzen zu den Harmonischen zu ermitteln. Die Systemgröße umfasst entsprechend ein Fehlerbild und eine Fehlerschwere.

Anhand des Fehlerfalls und der Fehlerschwere erfolgt eine Stressbelastungsermittlung 30. Hierbei wird eine Stressbelastung der elektromechanischen Komponente 4 aus der Systemgröße, welcher der Fehlerfall und die Fehlerschwere zugeordnet ist, mittels eines nummerischen Verfahrens an einem physikalischen Modell simuliert. Das numerische Verfahren ist beispielsweise eine FEM-Simulation, insbesondere eine 3D-FEM-Simulation. Das physikalische Modell ist beispielsweise ein CAD-Modell oder ein vereinfachtes Universalmodell. Das CAD-Modell beinhaltet insbesondere die entsprechenden Randbedingungen und Materialeigenschaften. Ein vereinfachtes Universalmodell ist beispielswiese ein CAD-Modell, welches, insbesondere hinsichtlich seiner geometrischen Ausgestaltung, derartig vereinfacht ist, dass es für eine Mehrzahl von Ausführungen der elektromechanischen Komponente 4 verwendbar ist. Das physikalische Modell befindet sich in der Cloud 16 und wird für die Simulation heruntergeladen. Alternativ findet zumindest ein Teil der Simulation in der Cloud 16 statt. Erfindungsgemäß wird simuliert, welche Kräfte aufgrund eines ermittelten Fehlerbildes auf zumindest einen Teil der elektromechanischen Komponente 4 wirken, was beispielsweise zu einem Verschleiß oder sogar zu einem Defekt führt. Beispielsweise wird eine Schwingungsgeschwindigkeit und/oder eine Schwingungsbeschleunigung an einem Modell eines Lagers, insbesondere eines Wälzlagers, simuliert.

Anhand der simulierten Stressbelastung erfolgt eine Ermittlung der Restlebensdauer 32, wobei beispielsweise Materialeigenschaften der elektromechanischen Komponente 4 mit einbezogen werden, um die verbleibende Nutzungsdauer mit hoher Qualität, Genauigkeit und Zuverlässigkeit zu ermitteln.

Die ermittelten Daten 34 zur Restlebensdauer werden von der Analyseeinheit 10 an die Kommunikationseinheit 12 übertragen, wobei von dort eine Datenübertragung 36 an eine Cloud 16 und/oder an eine Anzeigevorrichtung 18 erfolgt.

## Patentansprüche

1. Verfahren zur Abschätzung einer Restlebensdauer mindestens einer elektromechanischen Komponente (4),
- wobei mindestens eine Systemgröße aus Sensordaten mindestens einer Sensorvorrichtung (6), der zumindest eine elektromechanische Komponente (4) zugeordnet ist, ermittelt wird, wobei die Systemgröße aus einem Vibrationssignal ermittelt wird, wobei der Systemgröße anhand eines ermittelten Spektrums der Sensordaten mindestens ein Fehlerbild eines Fehlerfalls der elektromechanischen Komponente (4) zugeordnet wird,
- wobei der Systemgröße mit Hilfe der ermittelten Daten (26) zur Systemgröße und mittels eines künstlichen neuronalen Netzes das Fehlerbild der elektromechanischen Komponente (4) zugeordnet wird,
- wobei der Systemgröße anhand einer Harmonischen und/oder einer Amplitude der Sensordaten eine Fehlerschwere des Fehlerfalls zugeordnet wird,
- wobei eine Stressbelastung der elektromechanischen Komponente (4) aufgrund des Fehlerbildes und der Fehlerschwere mittels eines numerischen Verfahrens an einem physikalischen Modell simuliert wird, indem simuliert wird, welche Kräfte aufgrund des Fehlerbildes auf zumindest einen Teil der elektromechanischen Komponente wirken, und
- wobei eine Restlebensdauer aus der simulierten Stressbelastung ermittelt wird.

2. Verfahren nach Anspruch 1,
wobei das künstliche neuronale Netz mehrschichtig ausgeführt ist.

3. Verfahren nach Anspruch 1 oder 2,
wobei das künstliche neuronale Netz vortrainiert ist.

4. Verfahren nach einem der vorherigen Ansprüche,
wobei die Stressbelastung mittels einer FEM-Simulation simuliert wird.

5. Verfahren nach einem der vorherigen Ansprüche,
wobei die Systemgröße mittels einer Spektralanalyse und/oder einer Hüllkurvenanalyse der Sensordaten ermittelt wird.

6. Verfahren nach einem der Ansprüche 1 oder 5,
wobei der Systemgröße anhand einer Harmonischen und/oder einer Amplitude der Sensordaten eine Fehlerschwere eines Fehlerfalls der elektromechanischen Komponente zugeordnet wird.

7. System (2) zur Durchführung eines Verfahrens nach einem der Ansprüche 1 bis 6, aufweisend mindestens eine Analyseeinheit (10) und eine Sensorvorrichtung (6), der zumindest eine elektromechanische Komponente (4) zugeordnet ist, die dafür vorgesehen ist, ein Vibrationssignal abzugeben, und die mit der Analyseeinheit (10) verbunden ist,
wobei die Analyseeinheit (10) ein Algorithmik-Modul (20) und ein Simulations-Modul (22) aufweist,
- wobei das Algorithmik-Modul (20) Fehlerdetektionsmittel aufweist, wobei die Fehlerdetektionsmittel des Algorithmik-Moduls (20) zumindest ein künstliches neuronales Netz umfassen und dafür vorgesehen sind, die drei ersten Schritte des Anspruchs 1 auszuführen, und
- wobei das Simulations-Modul (22) eine Recheneinheit aufweist, die zur Durchführung eines numerischen Verfahrens an einem physikalischen Modell gemäß den zwei letzten Schritten des Anspruchs 1 vorgesehen ist.

8. System (2) nach Anspruch 7,
wobei das künstliche neuronale Netz mehrschichtig ausgeführt ist.

9. System (2) nach einem der Ansprüche 7 bis 8,
wobei die Sensorvorrichtung (6) als Vibrationssensor oder Beschleunigungssensor ausgeführt ist.

10. System (2) nach einem der Ansprüche 7 bis 9,
wobei die elektromechanische Komponente (4) ein Lager, insbesondere ein Wälzlager, umfasst.

## Claims

1. Method for estimating a remaining service life of at least one electromechanical component (4),
- wherein at least one system variable is ascertained from sensor data of at least one sensor apparatus (6) to which at least one electromechanical component (4) is assigned, wherein the system variable is ascertained from a vibration signal, wherein the system variable is assigned at least one error pattern of an error situation of the electromechanical component (4) on the basis of an ascertained spectrum of the sensor data,
- wherein the system variable is assigned the error pattern of the electromechanical component (4) with the aid of the ascertained data (26) on the system variable and by means of an artificial neural network,
- wherein the system variable is assigned an error severity of the error situation on the basis of a harmonic and/or an amplitude of the sensor data,
- wherein a stress load of the electromechanical component (4) is simulated on the basis of the error pattern and the error severity by means of a numerical method on a physical model, by simulating which forces act on at least one part of the electromechanical component on the basis of the error pattern, and
- wherein a remaining service life is ascertained from the simulated stress load.

2. Method according to claim 1,
wherein the artificial neural network is designed in multiple layers.

3. Method according to claim 1 or 2,
wherein the artificial neural network is pre-trained.

4. Method according to one of the preceding claims,
wherein the stress load is simulated by means of an FEM simulation.

5. Method according to one of the preceding claims,
wherein the system variable is ascertained by means of a spectral analysis and/or an envelope analysis of the sensor data.

6. Method according to one of claims 1 or 5,
wherein the system variable is assigned an error severity of an error situation of the electromechanical component on the basis of a harmonic and/or an amplitude of the sensor data.

7. System (2) for performing a method according to one of claims 1 to 6, having at least one analysis unit (10) and a sensor apparatus (6), to which at least one electromechanical component (4) is assigned, which is provided to emit a vibration signal and which is connected to the analysis unit (10),
wherein the analysis unit (10) has an algorithmic module (20) and a simulation module (22),
- wherein the algorithmic module (20) has error detection means, wherein the error detection means of the algorithmic module (20) comprise at least one artificial neural network and are provided to carry out the three first steps of claim 1, and
- wherein the simulation module (22) has a computing unit, which is provided for performing a numerical method on a physical model according to the two last steps of claim 1.

8. System (2) according to claim 7,
wherein the artificial neural network is designed in multiple layers.

9. System (2) according to one of claims 7 to 8,
wherein the sensor apparatus (6) is designed as a vibration sensor or acceleration sensor.

10. System (2) according to one of claims 7 to 9,
wherein the electromechanical component (4) comprises a bearing, in particular a roller bearing.

## Revendications

1. Procédé d'estimation d'une durée de vie restante d'au moins un composant (4) électronique,
- dans lequel on détermine au moins une grandeur de système à partir de données de capteur d'au moins un dispositif (6) capteur, auquel est associé au moins un composant (4) électromécanique, dans lequel on détermine la grandeur de système à partir d'un signal de vibration, dans lequel on associe à la grandeur de système, à l'aide d'un spectre déterminé des données de capteur, au moins une image de défaut d'un cas de défaut du composant (4) électromécanique,
- dans lequel on associe à la grandeur de système, à l'aide des données (26) déterminées pour la grandeur du système et au moyen d'un réseau neuronal artificiel, l'image de défaut du composant (4) électromécanique,
- dans lequel on associe à la grandeur du système, à l'aide d'un harmonique et/ou d'une amplitude des données de capteur, un poids de défaut du cas de défaut,
- dans lequel on simule une charge de stress du composant (4) électromécanique sur la base de l'image de défaut et du poids de défaut, au moyen d'un procédé numérique sur un modèle physique, en simulant les forces, qui, sur la base de l'image de défaut, s'appliquent à au moins une partie du composant électromécanique, et
- dans lequel on détermine une durée de vie restante à partir de la charge de stress simulée.

2. Procédé suivant la revendication 1,
dans lequel le réseau neuronal artificiel est réalisé en plusieurs couches.

3. Procédé suivant la revendication 1 ou 2,
dans lequel le réseau neuronal artificiel a subi un préapprentissage.

4. Procédé suivant l'une des revendications précédentes,
dans lequel on simule la charge de stress au moyen d'une simulation FEM.

5. Procédé suivant l'une des revendications précédentes,
dans lequel on détermine la grandeur de système au moyen d'une analyse spectrale et/ou d'une analyse de courbe enveloppe des données de capteur.

6. Procédé suivant l'une des revendications 1 ou 5,
dans lequel on associe à la grandeur de système, à l'aide d'un harmonique et/ou d'une amplitude des données de capteur, un poids de défaut d'un cas de défaut du composant électronique.

7. Système (2) pour effectuer un procédé suivant l'une des revendications 1 à 6, comportant au moins une unité (10) d'analyse et un dispositif (6) capteur, auquel est associé au moins un composant (4) électronique, qui est prévu pour donner un signal de vibration et qui est relié à l'unité (10) d'analyse,
dans lequel l'unité (10) d'analyse a un module (20) d'algorithmique et un module (22) de simulation,
- dans lequel le module (20) d'algorithmique a des moyens de détection de défaut, dans lequel les moyens de détection de défaut du module (20) algorithmique comprennent au moins un réseau neuronal artificiel et sont prévus pour effectuer les trois premiers stades de la revendication 1, et
- dans lequel le module (22) de simulation a une unité informatique, qui est prévue pour effectuer un procédé numérique sur un modèle physique, conformément aux deux derniers stades de la revendication 1.

8. Système (2) suivant la revendication 7,
dans lequel le réseau neuronal artificiel est réalisé en plusieurs couches.

9. Système (2) suivant l'une des revendications 7 à 8,
dans lequel le dispositif (6) capteur est réalisé en capteur de vibration ou en capteur d'accélération.

10. Système (2) suivant l'une des revendications 7 à 9,
dans lequel le composant (4) électromécanique est un palier, en particulier un palier à roulement.
